# EUROPEAN PATENT SPECIFICATION

(11) **EP 0 416 685 B1**
(45) Date of publication and mention of the grant of the patent: **22.02.1995**
(21) Application number: 90202268.0
(22) Date of filing: 24.08.1990
(51) Int. Cl.: H04L 12/56

(54) **Method for monitoring, by means of a monitoring device, a downstream transmission medium containing a multiplicity of virtual, asynchronously time-shared transmission channels**
Verfahren zur Überwachung eines abgehenden Übertragungsmediums mit einer Mehrzahl von virtuellen, asynchron zeitverschachtelten Übertragungskanälen mittels einer Überwachungseinrichtung
Méthode de surveillance au moyen d'un appareil de surveillance, milieu de transmission départ contenant une pluralité de canaux de transmission virtuels en multiplex temporel asynchrone

(30) Priority: 05.09.1989 NL 8902226
(43) Date of publication of application: 13.03.1991
(73) Proprietor: Koninklijke PTT Nederland N.V., 2509 CH Den Haag (NL)
(72) Inventor: Brandt, Dick, NL-2274 AA Voorburg (NL)

(56) References cited:
- EP-A- 0 275 678
- EP-A- 0 310 173
- EP-A- 0 381 275

## Description

### A. BACKGROUND TO THE INVENTION

### 1. Field of the invention

The invention relates to a method for monitoring, by means of a monitoring device, a downstream transmission medium which comprises a multiplicity of virtual, asynchronously time-shared transmission channels via which a data flow fed into said transmission medium can be transmitted, which data flow is composed of data cells which are each transmitted via one of said transmission channels and which each comprise a control word group containing one or more control words and also an information word group containing one or more information words, which control words are read out in the monitoring device; at least one variable being maintained, in addition, in the monitoring device, which variable is mutated on arrival of a data cell in accordance with a mutation algorithm containing one or more mutation parameters and said mutated variable then being processed to form an assessment signal in accordance with an assessment algorithm containing one or more assessment parameters.

### 2. Background of the invention

Such a method is disclosed, inter alia, by the European Patent Application EP-A-381 275 According to the known method, one variable is maintained per transmission channel, namely a counter position value which is mutated (increased) on the arrival of a data cell and is compared with a threshold, after which said data cell is transmitted to the downstream transmission medium if the counter position value is less than the threshold or is not transmitted if the counter position is higher than, or equal to, the threshold. According to the known method, only one variable is therefore mutated and processed to form one assessment signal which is then used directly as a control signal which determines whether or not a data cell is transmitted.

### B. SUMMARY OF THE INVENTION

The present invention expands and improves the known method, namely by providing for the mutation of a number of variables and the processing thereof to a number of assessment signals which are then converted by further processing into a control signal that is used to accept or not accept data cells. In other words, the present invention provides a method as specified under A. in which in the monitoring device, on arrival of a data cell, a number of variables is mutated and processed to form a corresponding number of assessment signals as mentioned, and furthermore, for each data cell, the said control word group comprises a control word which, on arrival of a data cell, is read out in the monitoring device and which gives an indication of those variables which have to be mutated and then processed and of the mutation and assessment algorithms to be used in doing so.

The invention therefore achieves the result that, for every virtual transmission channel, a control signal is formed which does not have to be based, as in accordance with the known method, solely on one variable, one mutation algorithm and one assessment algorithm, but can be based on more variables and more mutation and assessment algorithms, the variables and algorithms to be used being derived from one of the control words of the data cell appearing at the monitoring device. Different algorithms can be made use of for each virtual channel.

Furthermore, the invention preferably makes provision, in addition, that one or more of the said assessment signals is processed according to a combination algorithm containing one or more combination parameters to form a control signal and furthermore that, for each data cell, the said control word group comprises a control word which, on arrival of a data cell, is read out in the monitoring device and which gives an indication of those assessment signals which have to be processed and the combination algorithm to be used in doing so. In other words, the control signal does not correspond directly, as according to the known method, with the result of the processing of the mutated variable in the assessment algorithm, the assessment signal, but a further processing takes place on each of the assessment signals according to a combination algorithm, the assessment signals to be used for this being indicated by one of the control words of the data cell appearing at the monitoring device.

According to the invention it is also possible to form not one control signal, but more, namely by processing the assessment signals or a selected section thereof not according to one, but according to a variety of combination algorithms, the assessment signals and combination algorithms to be used in doing so being indicated by one of the control words of the data cell appearing at the monitoring device.

If desired, according to the invention, the various parameters to be used in the various said algorithms - all or a selected part thereof - can also be indicated by one of the control words of a data cell appearing at the monitoring device.

It is pointed out that, as mentioned, the variables, mutation, assessment and combination parameters to be used, and also the various parameters are indicated, for example, by control words from the control word group will be indicated by means of so-called pointers which indicate a particular position in a table concerned.

As a result of its great flexibility, the invention offers a number of application possibilities which the known method does not offer; a number of these will be dealt with in more detail under D. Among other things, the invention offers the possibility of monitoring not only individual users but also user groups or user categories.

The invention comprises, in addition to the method dealt with above, also a device for executing the method. The device according to the invention comprises a reading unit to which the data cells are presented for reading out at least the control words of said data cells, a setting unit for setting, on the basis of the data read out in the reading unit, which variables, or algorithms, or parameters have to be used for generating the control signal, furthermore a number of mutation units for mutating the respective variables indicated by the setting unit, and also a number of assessment units for processing the respective mutated variables to the respective assessment signals, one or more combination units for combining the assessment signals concerned to form one or more control signals, and a switching unit for temporarily storing the contents of the data cell and transmitting or not transmitting the data cell depending on the control signal concerned.

### C. REFERENCES

EP-A-381 275 Koninklijke PTT Nederland N.V., priority date 03. 02.1989, publication date 08.08.1990.

### D. EXEMPLARY EMBODIMENTS

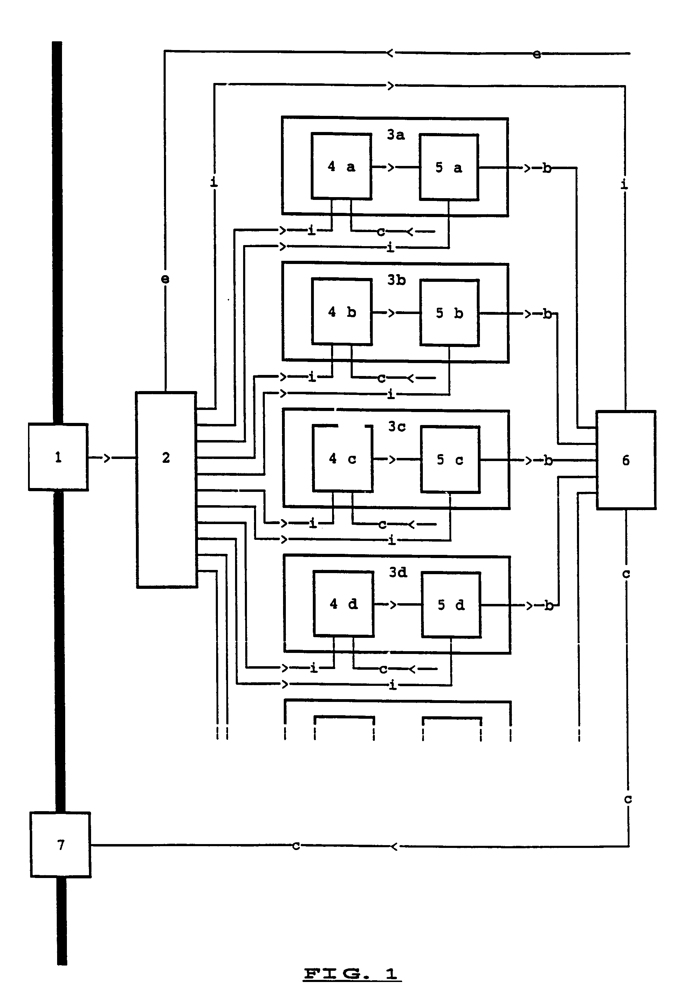

Figure 1 shows diagrammatically an exemplary embodiment of the invention, that is to say, of a device for implementing the method according to the invention.

The device comprises a reading unit 1 for reading the control words of data cells (which furthermore contain information words) presented to said reading unit 1. From the control words the (virtual) transmission channel, and possibly the user or user group and/or category, to which the data cell belongs is deduced. Furthermore, the control words which relate to the actual operation of the device in the generation of a control signal c which is presented to a switching unit 7 are read out in the reading unit 1. In the switching unit 7, the contents of the data cell are temporarily stored until the control signal c is emitted and - depending on the (binary) value of said signal c - the switching unit 7 transmits or, for example, if the presentation of data cells per unit time of the transmission channel concerned or of the user or user group concerned is too great - is not transmitted but removed so that the downstream transmission medium is not overloaded or disproportionately loaded with data cells of the type concerned. However, it is also possible not to deduce the factors which (lacuna) the actual operation of the device from control words specially intended for the purpose, as was proposed above, but to derive them from the other data derived from the control words concerned, such as, for example, the transmission channel or one or more of the other data mentioned.

On the basis of the data read out in the reading unit 1, the setting unit 2 sets which variables - belonging to said virtual transmission channel, said user, user group, category, etc. - have to be used to generate the control signal c. Furthermore, the setting unit 2 sets, on the basis of the data read out, the manner in which (according to which algorithms and parameters to be used therewith) the respective variables have to be mutated, and also the manner in which the various mutated variables have to be processed to form respective assessment signals; finally the manner in which the various assessment signals have to be combined to form a control signal c which controls the switching unit 7 is also set. In this connection, it may be the case that one variable or a plurality of variables has or have to be mutated and processed further for each transmission channel etc.; for example, one variable may represent the average number of data cells in the short term and a second variable may represent the average number in the long term. In this manner, one or more (statistical) characteristics can be maintained which are of importance for assessing whether data cells can be transmitted to the downstream transmission medium or not, if desired for each transmission channel and/or user, user group, category etc.

The variables, algorithms and parameters specified by the setting unit 2 - on the basis of the control words - are presented to a number, required for the purpose, of simultaneously operating processing units 3 (a, b, c, etc.) which each comprise a mutation unit 4 (a, b, c, etc.) and an assessment unit 5 (a, b, c, etc.).

In the mutation units 4 concerned, the variables specified by the setting unit 2 are read out from a table and then mutated according to a mutation algorithm. Said mutation algorithm may be one of a plurality; in that case, the setting unit 2 specifies which algorithm has to be used. Parameters to be used in the mutation can also be indicated by the setting unit 2 in a table, after which the parameter values are used during the mutation.

In the assessment units 5, the variables mutated by the respective preceding mutation units 4 are processed according to an assessment algorithm. for example, the average value of one variable is monitored (assessed) over a short time period in the assessment unit 5a, the average value of a second variable over a longer period in the assessment unit 5b and the variance of a third variable in the assessment unit 5c. From these variables, of which, for example, the first and the second relate to the transmission channel concerned and the third to the user group concerned, it is determined whether they do or do not exceed a threshold. The setting unit 2 indicates which algorithm has to be used. The setting unit 2 can also indicate the parameters to be used in the assessment in a table, after which the parameter values are used in the assessment of the mutated variable.

The operations carried out in the various processing units 3 produce equally as many assessment signals b which each, as for example mentioned, indicate whether a certain value will be exceeded if the data cell - which is still in the switching unit 7 - is transmitted, as a result of which the downstream transmission network will be improperly loaded - to a serious or less serious degree. The various separate assessment signals b are combined in accordance with a combination algorithm in a combination unit 6. In said combination unit 6, on the basis of the assessment of the consequences of transmitting the data cell according to several criteria, each thereof being carried out in the several processing units 3, a definitive control signal c is generated which activates the switching unit 7 to either transmit the data cell stored therein to the downstream transmission network or not to transmit ("discard") the data cell. Although it is possible - just as in the mutation and assessment units - to make use of one algorithm programmed therein, use can preferably be made of one of a plurality of algorithms, the choice of which is indicated by the setting unit 2 which also derived this item of data beforehand from the control word group of the data cell. The parameters to be used in said combination algorithm are also indicated by the setting unit 2, for example in a table containing possible parameter values from which the setting unit 2 - by means of a "pointer" -makes a choice in the same way as that in which the parameters are generated for the other algorithms.

In the figure, the various setting signals - for setting and selecting the indicated variables, algorithms and parameters specified by the control word group of the data cell - originating from the setting unit 2 are all indicated by "i", the various assessment signals by "b" and the (final) control signal by "c".

However, it is also possible that more than one control signal is generated in the control unit 6, the various control signals then controlling, for example, various switching units 7, each having its own function.

It is furthermore pointed out that, during the monitoring of the (statistical) characteristics mentioned for each transmission channel and/or user, user group etc., either all the data cells (belonging to said transmission channel or said user, user group etc. respectively) arriving at the monitoring device are included, that is to say regardless of whether they are transmitted by the monitoring device, in this case the switching unit 7, or not or (only) the data cells which are transmitted by the switching unit 7 are included. A combination of those two options is also possible, i.e. that in one processing unit 3 all the data cells arriving are included in the calculation, while in another processing unit 3 only the data cells transmitted are involved in the calculation: the one assessment signal b then relates, for example, to the average number of data cells of a particular user group arriving, while the other assessment signal relates to the average number of data cells of said user group transmitted. In order to realize these options, a feedback facility is provided in the device between the control unit 6 and each of the mutation units 4. If the setting unit 2 deduces from the control word concerned of the data cell that, in a particular processing unit, for example 3b, account only has to be taken of the data cells insofar as they are transmitted by the switching unit 7,that is specified in the setting signal i to the mutation unit 4b. If the control signal c is such that the data cell has to be transmitted by the switching unit 7, the mutated value of the variable concerned is then stored in the mutation unit 4b as the variable which has to be taken into account on a subsequent occasion as the initial value; if, on the other hand, the control signal c is such that the data cell must not be transmitted by the switching unit 7, the mutated variable is not stored in the mutation unit 4b so that on a subsequent occasion account is taken of the original variable as the initial value. In the figure, this feedback is indicated by the control signal c which is presented to each of the mutation units 4. Whether a mutation unit 4 does in fact make use of the feedback signal c, is therefore determined by the setting signal concerned which is derived by the setting unit 2 from the control word group of the data cell. If account has to be taken in a mutation unit 4 of all the data cells (belonging to said transmission channel, said user, user group etc.) which present themselves to the device - that is to say, whether they are transmitted or not - it is not necessary to make use of the feedback (control) signal; in all cases, the mutated variable is stored as a new variable value in the mutation unit 4, regardless of whether the data cell is transmitted or not.

Finally, it is pointed out that the setting unit 2 can be activated not only by the control words from the data cells which appear at the reading unit 1 but also(for example additionally) from other parts of the transmission network. In the figure such an external signal which (also) sets the setting unit 2 is indicated by "e".

## Claims

1. Method for monitoring, by means of a monitoring device, a downstream transmission medium which comprises a multiplicity of virtual, asynchronously time-shared transmission channels via which a data flow fed into said transmission medium can be transmitted, which data flow is composed of data cells which are each transmitted via one of said transmission channels and which each comprise a control word group containing one or more control words and also an information word group containing one or more information words, which control words are read out in the monitoring device; at least one variable being maintained, in addition, in the monitoring device, which variable is mutated on arrival of a data cell in accordance with a mutation algorithm containing one or more mutation parameters and said mutated variable then being processed to form an assessment signal in accordance with an assessment algorithm containing one or more assessment parameters; in the monitoring device, on arrival of a data cell, a number of variables being mutated and processed to form a corresponding number of assessment signals as mentioned, and furthermore, for each data cell, the said control word group comprising a control word which, on arrival of a data cell, is read out in the monitoring device and giving an indication of those variables which have to be mutated and then processed and of the mutation and assessment algorithms to be used in doing so.

2. Method according to Claim 1, one or more of the assessment signals mentioned being processed in accordance with a combination algorithm containing one or more combination parameters to form a control signal, and furthermore, for each data cell, the control word group mentioned comprising a control word which, on arrival of a data cell in the monitoring device, is read out and giving an indication of the assessment signals which have to be processed and of the combination algorithm to be used in doing so.

3. Method according to Claim 1, one or more of the assessment signals mentioned being processed in accordance with a number of combination algorithms, each containing one or more combination parameters, to form a corresponding number of control signals, and furthermore, for each data cell, the control word group mentioned comprising a control word which, on arrival of a data cell in the monitoring device, is read out and giving an indication of the assessment signals which have to be processed and of the combination algorithms to be used in doing so.

4. Method according to one of the preceding claims, for each data cell, the control word group mentioned comprising a control word which, on arrival of a data cell in the monitoring device, is read out and giving an indication of the value, or at least a part of the value, of the respective parameters relating to the algorithms mentioned or at least a number of said parameters.

5. Device for executing the method according to one of the preceding claims, comprising a reading unit (1) to which the data cells are presented for reading out at least the control words of said data cells, a setting unit (2) for setting, on the basis of the data read out in the reading unit, which variables, or algorithms or parameters have to be used for generating the control signal (c), furthermore a number of mutation units (4a,b,c,..) for mutating the respective variables indicated by the setting unit, and also a number of assessment units (5a,b,c,..) for processing the respective mutated variables to form the respective assessment signals (b), one or more combination units (6) for combining the assessment signals concerned to form one or more control signals (c), and a switching unit (7) for temporarily storing the contents of the data cell and transmitting or not transmitting the data cell depending on the control signal concerned.

## Patentansprüche

1. Verfahren zum Ueberwachen mittels einer Ueberwachungsvorrichtung eines abgehenden Uebertragungsmediums, umfassend eine Vielzahl von virtuellen, asynchron zeitverschachtelten Uebertragungskanälen, über die ein dem Uebertragungsmedium zugefürter Datenfluss übertragen werden kann, wobei sich der Datenfluss aus Datenzellen zusammensetzt, von denen jede über einen der Uebertragungskanäle übertragen wird, und von denen jede eine Steuerwortgruppe umfasst, die ein oder mehrere Steuerwörter sowie eine Informationswortgruppe enthält, die eine oder mehrere Informationswörter enthält, wobei die Steuerwörter in der Ueberwachungsvorrichtung abgelesen werden; wobei mindestens eine Variable zusätzlich in der Ueberwachungsvorrichtung aufrechterhalten wird, wobei diese Variable beim Eintreffen einer Datenzelle gemäss einem Mutationsalgorithmus mutiert wird, der ein oder mehrere Mutationsparameter enthält, worauf die mutierte Variable verarbeitet wird, um gemäss einem Bewertungsalgorithmus, der ein oder mehrere Bewertungsparameter enthält, ein Bewertungssignal zu bilden; wobei in der Ueberwachungsvorrichtung beim Eintreffen einer Datenzelle eine Anzahl Variablen mutiert und verarbeitet wird, um eine entsprechende Anzahl Bewertungssignale wie erwähnt zu bilden, und wobei die Steuerwortgruppe für jede Datenzelle ein Steuerwort umfasst, das beim Eintreffen einer Datenzelle in der Ueberwachungsvorrichtung abgelesen wird und eine Anzeige derjenigen Variablen, die mutiert und dann verarbeitet werden müssen, sowie der dabei zu verwendenden Mutations- und Bewertungsalgorithmen gibt.

2. Verfahren nach Anspruch 1, wobei ein oder mehrere der erwähnten Bewertungssignale gemäss einem Kombinationsalgorithmus, der ein oder mehrere Kombinationsparameter enthält, verarbeitet werden, um ein Steuersignal zu bilden, und wobei die erwähnte Steuerwortgruppe für jede Datenzelle ein Steuerwort umfasst, das beim Eintreffen einer Datenzelle in der Ueberwachungsvorrichtung abgelesen wird und eine Anzeige der Bewertungssignale, die verarbeitet werden müssen, sowie des dabei zu verwendenden Kombinationsalgorithmus gibt.

3. Verfahren nach Anspruch 1, wobei ein oder mehrere der erwähnten Bewertungssignale gemäss einer Anzahl Kombinationsalgorithmen verarbeitet werden, von denen jeder ein oder mehrere Kombinationsparameter enthält, um eine entsprechende Anzahl Steuersignale zu bilden, und wobei die erwähnte Steuerwortgruppe für jede Datenzelle ein Steuerwort umfasst, das beim Eintreffen einer Datenzelle in der Ueberwachungsvorrichtung abgelesen wird und eine Anzeige der Bewertungssignale, die verarbeitet werden müssen, sowie der dabei zu verwendenden Kombinationsalgorithmen gibt.

4. Verfahren nach einem der vorhergehenden Ansprüche, wobei die erwähnte Kontrollwortgruppe für jede Datenzelle ein Kontrollwort umfasst, das beim Eintreffen einer Datenzelle in der Ueberwachungsvorrichtung abgelesen wird und eine Anzeige des Werts gibt oder mindestens eines Teils des Werts der entsprechenden Parameter die sich auf die erwähnten Algorithmen oder mindestens auf eine Anzahl dieser Parameter beziehen.

5. Vorrichtung zum Ausführen des Verfahrens nach einem der vorhergehenden Ansprüche, umfassend eine Leseeinheit (1), der die Datenzellen zugeführt werden, um mindestens die Steuerwörter dieser Datenzellen abzulesen, eine Einstelleinheit (2) zum Einstellen, auf der Basis der in der Leseeinheit abgelesenen Daten, jener Variablen oder Algorithmen oder Parameter, die zum Erzeugen des Steuersignals (C) verwendet werden müssen, weiter eine Anzahl Mutationseinheiten (4a, b, c, ..) zum Mutieren der entsprechenden Variablen, die von der Einstelleinheit angezeigt werden, sowie ebenfalls eine Anzahl Bewertungseinheiten (5a, b, c, ..) zum Verarbeiten der entsprechenden mutierten Variablen, um die entsprechenden Bewertungssignale (b) zu bilden, eine oder mehrere Kombinationseinheiten (6) zum Kombinieren der betreffenden Bewertungssignale, um ein oder mehrere Steuersignale (c) zu bilden, und eine Schalteinheit (7) zum temporären Speichern des Inhalts der Datenzelle und zum Uebertragen oder Nichtübertragen der Datenzelle in Abhängigkeit vom betreffenden Steuersignal.

## Revendications

1. Procédé pour surveiller, au moyen d'un dispositif de surveillance, un support de transmission qui comprend un grand nombre de canaux de transmission virtuels en temps partagé de manière asynchrone, par lesquels un flux de données, délivré audit support de transmission, peut être transmis, lequel flux de données est composé de cellules de données qui sont chacune transmises par l'un desdits canaux de transmission et qui comprennent chacune un groupe de mots de commande contenant un ou plusieurs mots de commande et également un groupe de mots d'information contenant un ou plusieurs mots d'information, lesquels mots de commande sont lus dans le dispositif de surveillance ; au moins une variable étant conservée, en plus, dans le dispositif de surveillance, laquelle variable est transformée, lors de l'arrivée d'une cellule de données, en fonction d'un algorithme de mutation contenant un ou plusieurs paramètres de mutation et ladite variable transformée étant alors traitée, pour former un signal d'estimation, en fonction d'un algorithme d'estimation contenant un ou plusieurs paramètres d'estimation ; dans le dispositif de surveillance, lors de l'arrivée d'une cellule de données, un certain nombre de variables étant transformées et traitées pour former un nombre correspondant de signaux d'estimation tels que mentionnés, et de plus, pour chaque cellule de données, ledit groupe de mots de commande comprenant un mot de commande qui, lors de l'arrivée d'une cellule de données, est lu dans le dispositif de surveillance et désigne celles des variables qui doivent être transformées et ensuite traitées et les algorithmes de mutation et d'estimation à utiliser pour ce faire.

2. Procédé selon la revendication 1, dans lequel un ou plusieurs desdits signaux d'estimation sont traités en fonction d'un algorithme de combinaison contenant un ou plusieurs paramètres de combinaison pour former un signal de commande, et dans lequel, en outre, pour chaque cellule de données, ledit groupe de mots de commande comprend un mot de commande qui, lors de l'arrivée d'une cellule de données dans le dispositif de surveillance, est lu et désigne les signaux d'estimation qui doivent être traités et l'algorithme de combinaison à utiliser pour ce faire.

3. Procédé selon la revendication 1, dans lequel un ou plusieurs desdits signaux d'estimation sont traités en fonction d'un certain nombre d'algorithmes de combinaison contenant un ou plusieurs paramètres de combinaison pour former un nombre correspondant de signaux de commande, et dans lequel, en outre, pour chaque cellule de données, ledit groupe de mots de commande comprend un mot de commande qui, lors de l'arrivée d'une cellule de données dans le dispositif de surveillance, est lu et désigne les signaux d'estimation qui doivent être traités et les algorithmes de combinaison à utiliser pour ce faire.

4. Procédé selon l'une quelconque des revendications précédentes, dans lequel, pour chacune des cellules de données, ledit groupe de mots de commande comprend un mot de commande qui, lors de l'arrivée d'une cellule de données dans le dispositif de surveillance, est lu, et donne une indication de la valeur, ou au moins d'une partie de la valeur, des paramètres respectifs se rapportant auxdits algorithmes, ou au moins d'un certain nombre desdits paramètres.

5. Dispositif pour mettre en oeuvre le procédé selon l'une des revendications précédentes comprenant : un module de lecture (1) auquel les cellules de données sont présentées pour qu'il lise au moins les mots de commande desdites cellules de données ; un module de réglage (2), pour fixer, sur la base de la donnée lue dans le module de lecture, celles des variables, ou algorithmes ou paramètres, qui doivent être utilisés pour produire le signal de commande (c) ; de plus, un certain nombre de modules de mutation (4a, b, c, ...) pour transformer les variables respectives désignées par le module de réglage ; et également un certain nombre de modules d'estimation (5a, b, c, ...) pour traiter les variables transformées respectives en des signaux d'estimation (b) respectifs ; un ou plusieurs modules de combinaison (6) pour combiner les signaux d'estimation concernés pour former un ou plusieurs signaux de commande (c) ; et un module de commutation (7) pour mémoriser temporairement le contenu des cellules de données et pour transmettre, ou ne pas transmettre, la cellule de données en fonction du signal de commande concerné.
